# EUROPEAN PATENT APPLICATION

(11) **EP 3 742 625 A1**
(43) Date of publication of application: **25.11.2020**
(21) Application number: 18906742.4
(22) Date of filing: 26.02.2018
(51) Int. Cl.: H04B 7/06, H04W 16/28, H04W 24/04

(54) **BASE STATION AND RADIO COMMUNICATION METHOD**

(71) Applicant: Mitsubishi Electric Corporation, Tokyo 100-8310 (JP)
(72) Inventor: UCHINO, Daichi, Tokyo 100-8310 (JP); FUKUI, Noriyuki, Tokyo 100-8310 (JP)
(74) Representative: Pfenning, Meinig & Partner mbB
(86) International application number: PCT/JP2018/007032
(87) International publication number: WO 2019/163139

(57) **Abstract**

A base station (10) is characterized in that it includes: a communication unit (12) capable of transmitting a reference signal (2) to a plurality of beam spots (1) each being a radiation range of a directional beam, the reference signal (2) being used by a terminal (20) in a beam spot (1) to measure a reception quality, and capable of transmitting the reference signal (2) simultaneously to a beam spot group (3) formed of one or more of the beam spots (1); and a control unit (14) that assigns consecutive time slots for transmitting the reference signal (2) to a beam spot group (3) covering adjacent radiation ranges, of the beam spot groups (3).

## Description

### Field

The present invention relates to a base station that performs communication using a directional beam and to a radio communication method therefor.

### Background

In a technique of performing communication using a directional beam, when the directional beam is directed at an appropriate angle, high reception quality can be obtained, but when the angle of the directional beam is inappropriate, a beam connection failure may occur in which a reception quality required for data communication cannot be obtained. As a method for estimating an appropriate angle in question, there has been known a method called beam search, in which a base station performs three-dimensional scan using a directional beam. In the beam search, the base station sequentially emits directional beams at several different angles to transmit reference signals. A terminal uses the reference signals received to transmit, to the base station, reception quality information indicating reception qualities of the communication that has used the directional beams of their respective angles. The base station estimates a beam spot where the terminal is located, based on the reception quality information fed back from the terminal. Note that a beam spot is defined as a radiation range of a directional beam radiated by the base station.

Non Patent Literature 1 discloses a communication system that uses beam search in conjunction with beam tracking in which a directional beam is subjected to follow-up control to match movement of a terminal for which the angle has already been estimated in past. In this system, the base station sequentially radiates directional beams having several different angles around an area where the terminal for which the angle has already been estimated, and determines the angle of a directional beam with a better reception quality based on the reception quality information fed back from the terminal.

### Citation List

### Non Patent Literature

Non Patent Literature 1: Yuki Inoue, et al., "Experimental Evaluation of Downlink Transmission and Beam Tracking Performance for 5G mmW Radio Access in Indoor Shielded Environment", IEEE PIMRC, Sep. 2015

### Summary

### Technical Problem

However, in the system disclosed in Non Patent Literature 1, in order to inform the base station of the beam spot where the terminal is located, the terminal needs to periodically measure the reference signals to feed back the reception qualities even during a process of intermittent reception of the terminal. In order to prevent a beam connection failure, it is desirable to increase the number of beam spots to be measured and measure the reference signals with high frequency. As the number of beam spots to be measured increases, the time during which the terminal is activated for measuring the reference signals is longer, thereby leading to the problem that power consumption in the terminal increases.

The present invention has been made in view of the above circumstances, and an object thereof is to provide a base station capable of preventing an increase in the power consumption of a terminal.

### Solution to Problem

In order to solve the above-mentioned problems and achieve the object, the present invention provides a base station comprising: a communication unit capable of transmitting a reference signal to a plurality of beam spots that are radiation ranges of a directional beam, the reference signal being used by a terminal in a beam spot to measure a reception quality, and capable of transmitting the reference signal simultaneously to a beam spot group formed of one or more of the beam spots; and a control unit to assign consecutive time slots for transmitting the reference signal to a target beam spot group of beam spot groups each corresponding to the beam spot group, which covers adjacent radiation ranges.

### Advantageous Effects of Invention

A base station according to the present invention can achieve the effect of preventing an increase in power consumption of a terminal.

### Brief Description of Drawings

FIG. 1 is a diagram illustrating a configuration of a radio communication system according to a first embodiment of the present invention.
FIG. 2 is a diagram illustrating a configuration of the base station illustrated in FIG. 1.
FIG. 3 is a diagram illustrating a configuration of the terminal illustrated in FIG. 1.
FIG. 4 is a diagram illustrating a first example of a hardware configuration for implementing the base station illustrated in FIG. 2 and the terminal illustrated in FIG. 3.
FIG. 5 is a diagram illustrating a second example of a hardware configuration for implementing the base station illustrated in FIG. 2 and the terminal illustrated in FIG. 3.
FIG. 6 is a sequence diagram illustrating an operation in which the radio communication system illustrated in FIG. 1 starts communication.
FIG. 7 is a diagram illustrating beam spots formed by the base station illustrated in FIG. 1.
FIG. 8 is a diagram illustrating timings at which the base station transmits reference signals to the beam spots illustrated in FIG. 7.
FIG. 9 is a sequence diagram illustrating an operation in which the terminal illustrated in FIG. 1 switches an operation mode.
FIG. 10 is a diagram illustrating a method for transmitting reference signals by the base station according to the first embodiment of the present invention.
FIG. 11 is a diagram illustrating timings that the base station illustrated in FIG. 10 uses for transmitting reference signals to each of a plurality of beam spot groups.
FIG. 12 is a diagram illustrating a modification of the method for transmitting reference signals by the base station according to the first embodiment of the present invention.
FIG. 13 is a diagram illustrating timings that the base station illustrated in FIG. 12 uses for transmitting reference signals to each of a plurality of beam spot groups.
FIG. 14 is a diagram illustrating a first example of beam spots for which the terminal according to the first embodiment of the present invention measures reference signals.
FIG. 15 is a diagram illustrating timings at which the base station transmits reference signals and the state of the terminal illustrated in FIG. 14 for the case of the terminal in the process of operating in a normal mode.
FIG. 16 is a diagram illustrating timings at which the base station transmits reference signals and the state of the terminal illustrated in FIG. 14 for the case of the terminal in the process of operating in an intermittent reception mode.
FIG. 17 is a diagram illustrating a second example of beam spots for which the terminal according to the first embodiment of the present invention measures reference signals.
FIG. 18 is a diagram illustrating a first example of timings at which the base station transmits reference signals and the state of the terminal illustrated in FIG. 17 for the case of the terminal in the process of operating in an intermittent reception mode.
FIG. 19 is a diagram illustrating a second example of timings at which the base station transmits reference signals and the state of the terminal illustrated in FIG. 17 for the case of the terminal in the process of operating in the intermittent reception mode.
FIG. 20 is a diagram illustrating a third example of the beam spots for which the terminal according to the first embodiment of the present invention measures reference signals.
FIG. 21 is a diagram illustrating timings at which the base station transmits reference signals and the state of the terminal illustrated in FIG. 20 for the case of the terminal in the process of operating in the intermittent reception mode.
FIG. 22 is a flowchart illustrating an operation of the base station when the terminal illustrated in FIG. 1 shifts to the intermittent reception mode.
FIG. 23 is a flowchart illustrating an operation of the terminal when the terminal illustrated in FIG. 1 shifts to the intermittent reception mode.
FIG. 24 is a flowchart illustrating an operation in which the base station illustrated in FIG. 1 determines a reference signal measurement cycle of the terminal.
FIG. 25 is a diagram for explaining the reference signal measurement cycle of the terminal illustrated in FIG. 1.
FIG. 26 is a chart illustrating communication timings of the base station and the states of the terminals illustrated in FIG. 25.

### Description of Embodiments

Hereinafter, a base station and a radio communication method according to an embodiment of the present invention will be described in detail with reference to the drawings. The present invention is not necessarily limited by the embodiment.

### First Embodiment.

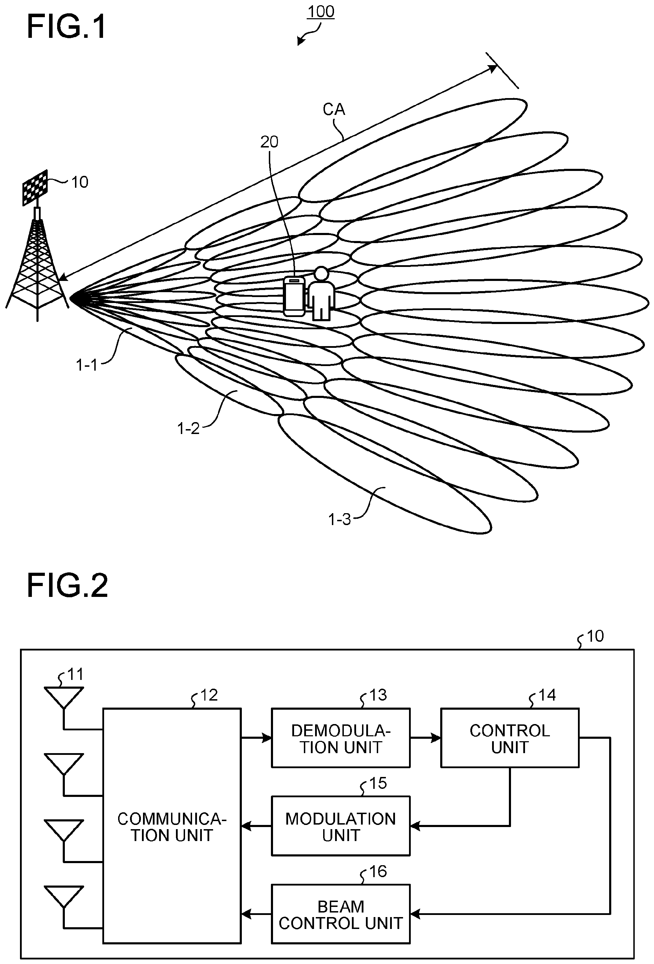

FIG. 1 is a diagram illustrating a configuration of a radio communication system 100 according to the first embodiment of the present invention. The radio communication system 100 includes a base station 10 and a terminal 20. The base station 10 can communicate with the terminal 20 using a directional beam. Ranges irradiated with a directional beam are referred to as beam spots 1-1, 1-2, and 1-3, respectively.

Hereinafter, when it is not necessary to distinguish the beam spots 1-1, 1-2, and 1-3 from one another, they may be simply referred to as a beam spot 1 or beam spots 1. In the following description, just as the beam spots 1 are referred to as the beam spots 1-1, 1-2, and 1-3, respectively, so two or more components having the same function may be distinguished by giving a hyphen and then a different number after a common symbol.

The beam spots 1-1, 1-2, and 1-3 that are ranges irradiated with a directional beam by the base station 10 form a coverage area CA of the base station 10. The base station 10 can estimate a beam spot 1 where the terminal 20 is located by performing beam search, beam tracking, and the like on the beam spots 1-1, 1-2, and 1-3 using one or more directional beams.

FIG. 2 is a diagram illustrating a configuration of the base station 10 illustrated in FIG. 1. The base station 10 includes a plurality of antennas 11, a communication unit 12, a demodulation unit 13, a control unit 14, a modulation unit 15, and a beam control unit 16.

The communication unit 12 can output a signal received via the antenna 11 to the demodulation unit 13, and transmit a signal inputted from the modulation unit 15 via the antenna 11. At this time, the communication unit 12 can radiate a directional beam formed using the plurality of antennas 11 to transmit a signal to and receive a signal from the terminal 20 within the beam spot 1 formed by the directional beam. At this time, the angle of the directional beam to be radiated is specified by the beam control unit 16.

The demodulation unit 13 performs reception processing such as demodulation on the signal inputted from the communication unit 12, and outputs the resultant signal obtained by the demodulation to the control unit 14. The control unit 14 outputs information extracted from the signal inputted from the demodulation unit 13 to the beam control unit 16, and outputs a signal to be transmitted to the outside of the base station 10 to the modulation unit 15. The modulation unit 15 performs transmission processing such as modulation on the signal inputted from the control unit 14, and outputs the resultant signal obtained by the modulation to the communication unit 12. The beam control unit 16 calculates, based on the information inputted from the control unit 14, the angle at which the directional beam is directed when the communication unit 12 performs communication, and provides the calculated angle to the communication unit 12.

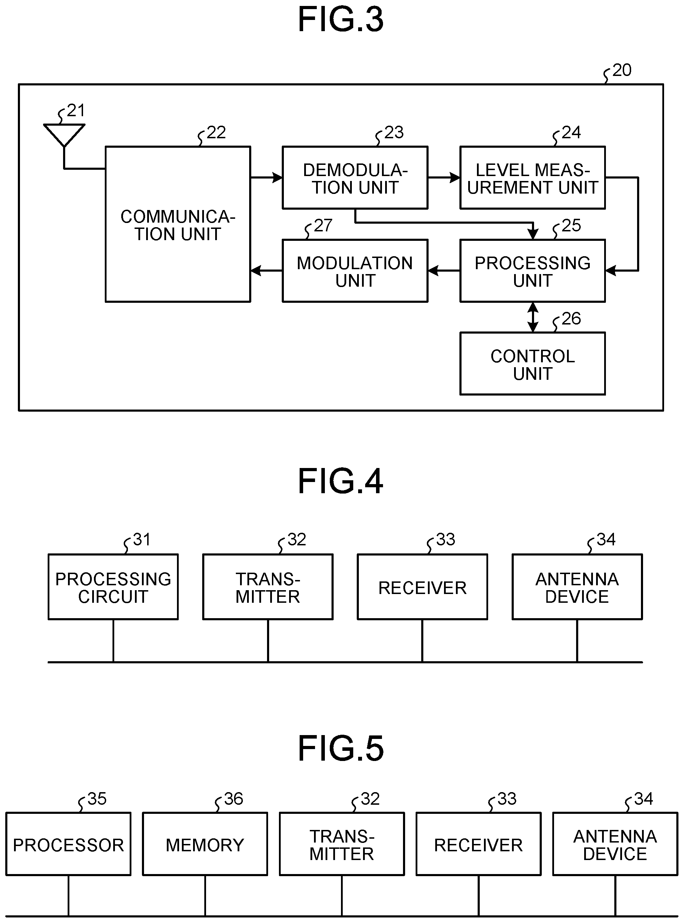

FIG. 3 is a diagram illustrating a configuration of the terminal 20 illustrated in FIG. 1. The terminal 20 includes an antenna 21, a communication unit 22, a demodulation unit 23, a level measurement unit 24, a processing unit 25, a control unit 26, and a modulation unit 27.

The communication unit 22 can output a signal received via the antenna 21 to the demodulation unit 23, and transmit a signal inputted from the modulation unit 27 via the antenna 21. The demodulation unit 23 performs reception processing such as demodulation on the signal outputted by the communication unit 22, and outputs the resultant signal obtained by the demodulation to at least one of the level measurement unit 24 and the processing unit 25. The level measurement unit 24 measures a reception quality of the signal inputted from the demodulation unit 23, specifically, a reference signal transmitted by the base station 10. The level measurement unit 24 outputs information indicating the measured reception quality to the processing unit 25. The processing unit 25 converts the signal inputted from the demodulation unit 23 and the information inputted from the level measurement unit 24 into a format that can be handled by the control unit 26, and outputs the result in the format to the control unit 26. The processing unit 25 also converts the information inputted from the control unit 26 into a transmission signal, and outputs the transmission signal to the modulation unit 27.

The control unit 26 can control the terminal 20 based on the information inputted from the processing unit 25. The control unit 26 outputs, to the processing unit 25, information to be transmitted to one or more devices other than the terminal 20, such as the base station 10. The modulation unit 27 performs transmission processing such as modulation on the transmission signal inputted from the processing unit 25, and outputs the resultant signal subjected to the transmission processing to the communication unit 22.

Next, description is given for hardware configurations for implementing the functions of the base station 10 and the terminal 20. FIG. 4 is a diagram illustrating a first example of a hardware configuration for implementing the base station 10 illustrated in FIG. 2 and the terminal 20 illustrated in FIG. 3. FIG. 5 is a diagram illustrating a second example of a hardware configuration for implementing the base station 10 illustrated in FIG. 2 and the terminal 20 illustrated in FIG. 3.

For example, the base station 10 and the terminal 20 can be implemented using a processing circuit 31, a transmitter 32, a receiver 33, and an antenna device 34, as illustrated in FIG. 4. Alternatively, the base station 10 and the terminal 20 can be implemented using the transmitter 32, the receiver 33, the antenna device 34, a processor 35, and a memory 36, as illustrated in FIG. 5.

The processing circuit 31 is a dedicated hardware set, e.g. a single circuit, a composite circuit, a programmed processor, a parallel programmed processor, an application specific integrated circuit (ASIC), a field programmable gate array (FPGA), or any combination thereof.

The transmitter 32 performs transmission processing for transmitting a signal to an external device. The receiver 33 performs reception processing for receiving a signal from an external device. The antenna device 34 is a device that is configured to convert high-frequency energy into electromagnetic waves and radiate the electromagnetic waves into space, and to convert electromagnetic waves in space into high-frequency energy.

The processor 35 is a central processing unit (CPU, also referred to as a central processing device, a processing device, a computation device, a microprocessor, a microcomputer, a processor, or a digital signal processor (DSP)), a system large scale integration (LSI), or the like.

Examples of the memory 36 include a non-volatile or volatile semiconductor memory, a magnetic disk, a flexible disk, an optical disc, a compact disc, a mini disc, a digital versatile disk (DVD), and the like. Examples of the non-volatile or volatile semiconductor memory include a random access memory (RAM), a read only memory (ROM), a flash memory, an erasable programmable read only memory (EPROM), an electrically erasable programmable read only memory (EEPROM) (registered trademark), and the like. The memory 36 can store computer programs such as various types of software and firmware that are executed by the processor 35, various kinds of data generated by the processor 35 in the process of execution of the computer program, and the like.

The antenna 11 illustrated in FIG. 2 and the antenna 21 illustrated in FIG. 3 can be implemented using the antenna device 34. The communication unit 12 illustrated in FIG. 2 and the communication unit 22 illustrated in FIG. 3 can be implemented using the transmitter 32 and the receiver 33.

The demodulation unit 13, the control unit 14, the modulation unit 15, and the beam control unit 16 of the base station 10 illustrated in FIG. 2 and the demodulation unit 23, the level measurement unit 24, the processing unit 25, the control unit 26, and the modulation unit 27 of the terminal 20 illustrated in FIG. 3 can be implemented using, for example, the processing circuit 31 that is of dedicated hardware. Alternatively, the demodulation unit 13, the control unit 14, the modulation unit 15, and the beam control unit 16 of the base station 10 illustrated in FIG. 2 and the demodulation unit 23, the level measurement unit 24, the processing unit 25, the control unit 26, and the modulation unit 27 of the terminal 20 illustrated in FIG. 3 can be implemented by the processor 35 reading and executing computer programs stored in the memory 36. Alternatively, some of the demodulation unit 13, the control unit 14, the modulation unit 15, and the beam control unit 16 of the base station 10 illustrated in FIG. 2 and some of the demodulation unit 23, the level measurement unit 24, the processing unit 25, the control unit 26, and the modulation unit 27 of the terminal 20 illustrated in FIG. 3 may be implemented by dedicated hardware, and the rest(s) may be implemented by software, firmware, or any combination of software and firmware.

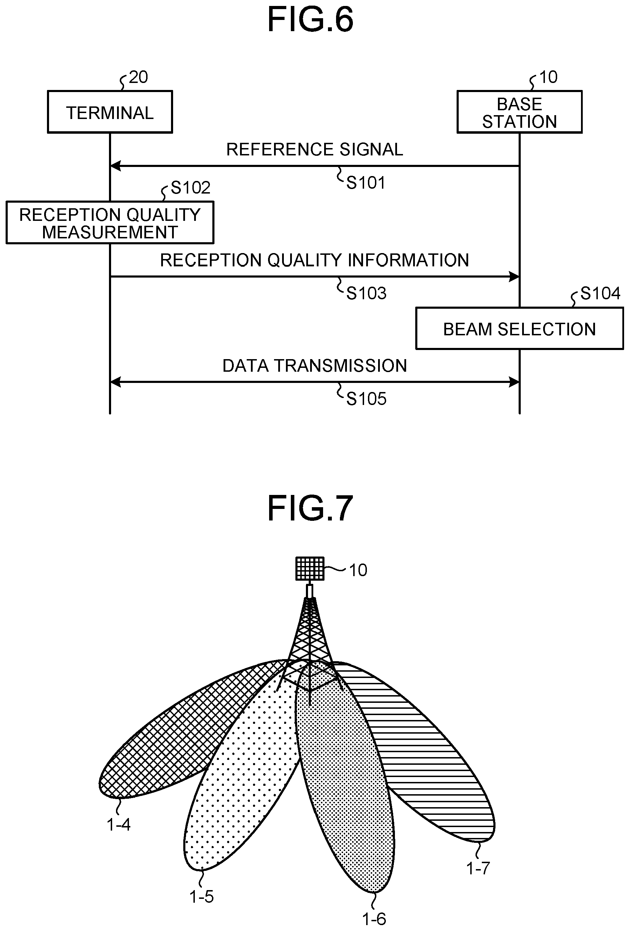

FIG. 6 is a sequence diagram illustrating the operation in which the radio communication system 100 illustrated in FIG. 1 starts communication. In order for the base station 10 to perform at least one of beam search and beam tracking, the base station 10 periodically transmits reference signals to the terminal 20 located in the coverage area CA (step S101). Specifically, the communication unit 12 of the base station 10 transmits the reference signals to a plurality of beam spots 1 while switching the angle of a directional beam. The terminal 20 measures the reception quality of one or more reference signals (step S102), generates reception quality information indicating the measured reception quality, and transmits the generated reception quality information to the base station 10 (step S103). The reception quality information includes a beam ID for identifying the angle of a directional beam, a value indicating the reception quality, and the like.

The base station 10 performs beam selection to select the angle of a directional beam to be used for communication with the terminal 20 based on the reception quality information fed back from the terminal 20 (step S104). The base station 10 and the terminal 20 start data transmission using a directional beam having the selected angle (step S105).

Note that the beam search is executed when the beam spot where the terminal 20 that has newly entered the coverage area CA is located should be estimated or when the terminal 20 that has experienced a beam connection failure restarts data transmission with the base station 10. The beam tracking is executed to cause a directional beam to follow the terminal 20 for which the angle of a directional beam to be used has already been selected in accordance with the movement of the terminal 20.

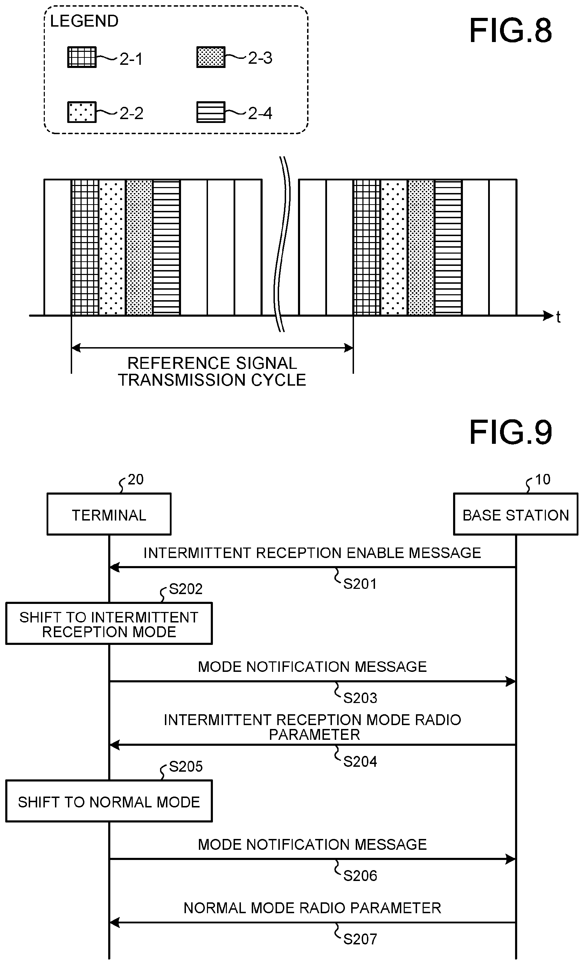

FIG. 7 is a diagram illustrating beam spots 1-4 to 1-7 formed by the base station 10 illustrated in FIG. 1. FIG. 8 is a diagram illustrating timings at which the base station 10 transmits reference signals to the beam spots 1-4 to 1-7 illustrated in FIG. 7.

FIG. 8 depicts an example in which the base station 10 sequentially irradiates the plurality of beam spots 1-4 to 1-7 with a single directional beam while switching the angle of the directional beam. The reference signal 2-1 illustrated in FIG. 8 is transmitted to the beam spot 1-4 illustrated in FIG. 7, the reference signal 2-2 is transmitted to the beam spot 1-5, the reference signal 2-3 is transmitted to the beam spot 1-6, and the reference signal 2-4 is transmitted to the beam spot 1-7. In this manner, the reference signals 2-1 to 2-4 are transmitted to the beam spots 1-4 to 1-7 in time division, respectively. A period during which the reference signals 2-1 to 2-4 are not transmitted is an unused resource, which may be used for data communication or the like. When the base station 10 simultaneously radiates two or more directional beams, the base station 10 may transmit the reference signals using different symbols for the beam spots 1-4 to 1-7, respectively.

The terminal 20 can operate in two or more operation modes, e.g. not only a normal mode but also an intermittent reception mode in which the power consumption is lower than that in the normal mode. The above beam search or beam tracking operation may be performed not only when the terminal 20 is operating in the normal mode but also when the terminal 20 is operating in the intermittent reception mode.

FIG. 9 is a sequence diagram illustrating the operation in which the terminal 20 illustrated in FIG. 1 switches the operation mode. The base station 10 transmits an intermittent reception enable message to the terminal 20 (step S201). The intermittent reception enable message is also called a power preference indicator enable message, which is a message for enabling a function of notifying the base station 10 of the necessity of reducing power consumption.

Upon receiving the intermittent reception enable message, the terminal 20 can shift to the intermittent reception mode. The terminal 20 determines whether to shift to the intermittent reception mode based on, for example, whether or not the user of the terminal 20 is currently operating the terminal 20, whether or not the internal processing of the terminal 20 is currently being executed, and/or the like. When a predetermined condition is satisfied, the terminal 20 shifts to the intermittent reception mode (step S202). After the terminal 20 shifts to the intermittent reception mode, the terminal 20 transmits, to the base station 10, a mode notification message for notifying the base station 10 of the operation mode of the terminal 20 (step S203).

Upon receiving the mode notification message, the base station 10 generates radio parameters for the terminal 20 according to the operation mode of the terminal 20 indicated by the mode notification message. Here, because the terminal 20 is in the intermittent reception mode, the base station 10 generates intermittent reception mode radio parameters, and transmits the generated intermittent reception mode radio parameters to the terminal 20 (step S204) .

The terminal 20 determines whether to shift to the normal mode, and shifts to the normal mode when a predetermined condition is satisfied (step S205). After switching the operation mode, the terminal 20 transmits, again to the base station 10, a mode notification message for notifying the base station 10 of the operation mode of the terminal 20 (step S206).

Upon receiving the mode notification message, the base station 10 generates radio parameters for the terminal 20 according to the operation mode indicated by the mode notification message. Here, because the terminal 20 is in the normal mode, the base station 10 generates normal mode radio parameters, and transmits the generated normal mode radio parameter to the terminal 20 (step S207).

Note that examples of the radio parameters provided by the base station 10 for notification include the number of beam spots to be measured by the terminal 20, IDs for identifying the beam spots to be measured by the terminal 20, the cycle in which the terminal 20 measures the beam spots, the timing at which the terminal 20 starts processing using the changed radio parameters, the length of the intermittent reception cycle, the timing at which the terminal 20 is activated, and the interval for the activation of the terminal 20. Instead of the number of beam spots to be measured by the terminal 20 during intermittent reception and the IDs for identifying the beam spots, the number of beam spot groups and IDs for identifying the beam spot groups may be used for the parameters. A beam spot group is formed of one or more beam spots to which the reference signals are simultaneously transmitted. In a case where the number of beam spot groups and the IDs for identifying the beam spot groups are used instead of the number of beam spots to be measured by the terminal 20 during intermittent reception and the IDs for identifying the beam spots, the message indicating the radio parameters can be shortened, and resources can be saved.

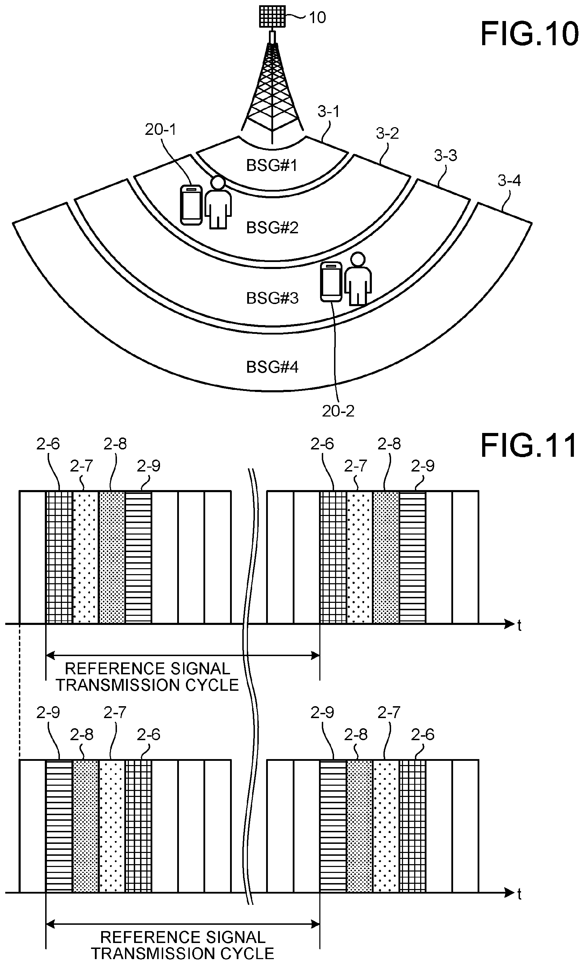

FIG. 10 is a diagram illustrating a method for transmitting the reference signals by the base station 10 according to the first embodiment of the present invention. The base station 10 divides a plurality of beam spots 1 within the coverage area CA into multiple beam spot groups 3-1 to 3-4. In the case where the number of directional beams that can be simultaneously radiated by the base station 10 is five, the base station 10 having 20 beam spots 1 in the coverage area CA transmits the reference signals divisionally for each of four timings or symbols. The beam spot groups 3 in this case are four beam spot groups 3 each formed of five beam spots 1, to which the reference signals are simultaneously transmitted from the base station 10.

In the example illustrated in FIG. 10, the beam spot groups 3-1 to 3-4 are arranged in the order of the beam spot groups 3-1, 3-2, 3-3, and 3-4 from a side closest to the base station 10. The base station 10 assigns consecutive time slots for transmitting the reference signals 2 to adjacent beam spot groups 3 of the plurality of beam spot groups 3. The adjacent beam spot groups 3 have, for example, a relation between the beam spot groups 3-1 and 3-2, the beam spot groups 3-2 and 3-3, or the beam spot groups 3-3 and 3-4. In short, the relation is a relation in which radiation ranges of directional beams radiated by the base station 10 radiates are adjacent to each other. To assign consecutive time slots for transmitting the reference signals 2 means to transmit the reference signals 2 in time division by transmitting consecutive reference signals 2 such as the first and second, the second and third, and the third and fourth reference signals 2 and making time slots to be used to be consecutive.

The base station 10 can transmit the reference signals 2 in the order of the beam spot group 3-1, the beam spot group 3-2, the beam spot group 3-3, and the beam spot group 3-4. The base station 10 may transmit the reference signals 2 in the order of the beam spot group 3-4, the beam spot group 3-3, the beam spot group 3-2, and the beam spot group 3-1.

FIG. 11 is a diagram illustrating timings that the base station 10 illustrated in FIG. 10 uses for transmitting the reference signals 2 to each of the beam spot groups 3. The reference signal 2-6 is transmitted to the beam spot group 3-1, the reference signal 2-7 is transmitted to the beam spot group 3-2, the reference signal 2-8 is transmitted to the beam spot group 3-3, and the reference signal 2-9 is transmitted to the beam spot group 3-4.

In a case where the base station 10 transmits the reference signals 2 in the order of the beam spot group 3-1, the beam spot group 3-2, the beam spot group 3-3, and the beam spot group 3-4, the reference signal 2-6, the reference signal 2-7, the reference signal 2-8, and the reference signal 2-9 are transmitted sequentially in this order. In a case where the base station 10 transmits the reference signals 2 in the order of the beam spot group 3-4, the beam spot group 3-3, the beam spot group 3-2, and the beam spot group 3-1, the reference signal 2-9, the reference signal 2-8, the reference signal 2-7, and the reference signal 2-6 are transmitted sequentially in this order. These transmission orders can make timings or symbols for the reference signals 2 to be transmitted to the adjacent beam spot groups 3 to be adjacent to each other.

When the terminal 20 is instructed by the base station 10 to measure a plurality of beam spots 1, the terminal 20 needs to keep itself in an activated state from its activation until all the beam spots 1 are irradiated with the directional beams. For this reason, in the intermittent reception mode, the power consumption of the terminal 20 can be reduced as the time during which the terminal 20 is kept activated is made shorter. For example, in a case where the base station 10 performs beam tracking on the terminal 20-1 located in the beam spot group 3-2, the base station 10 instructs the terminal 20-1 to measure the reception quality of the reference signals 2-6, 2-7, and 2-8 for not only the beam spot group 3-2 where the terminal 20-1 is located but also the plurality of beam spot groups 3-1 and 3-3 that are close to the beam spot group 3-2. In this case, since the reference signals 2-6, 2-7, and 2-8 to be measured by the terminal 20 are transmitted continuously on the time axis, the time during which the terminal 20 keeps activated can be shortened. Similarly, the terminal 20-2 located in the beam spot group 3-3 measures the reception quality of the reference signals 2-7, 2-8, and 2-9 for the beam spot groups 3-2, 3-3, and 3-4. Since the reference signals 2-7, 2-8, and 2-9 are also transmitted continuously on the time axis, the time during which the terminal 20 keeps activated can be shortened.

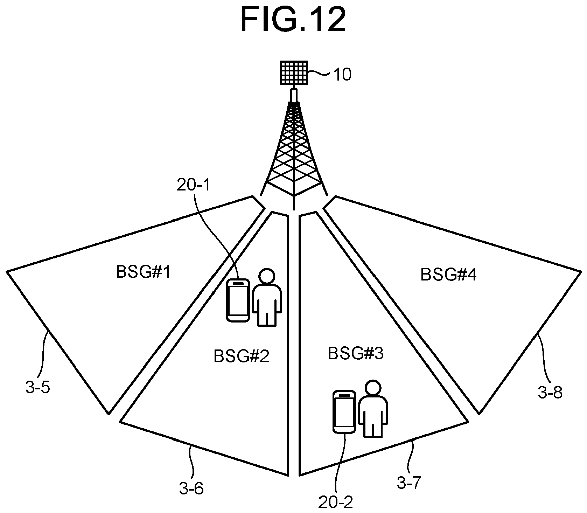

FIG. 12 is a diagram illustrating a modification of the method for transmitting reference signals by the base station 10 according to the first embodiment of the present invention. The modification illustrated in FIG. 12 differs from the example illustrated in FIG. 10 in respect of the way of dividing the beam spot groups 3. The base station 10 divides a plurality of beam spots 1 in the coverage area CA into two or more beam spot groups 3-5 to 3-8. The beam spot groups 3-5 to 3-8 are arranged sequentially in the order of the beam spot groups 3-5, 3-6, 3-7, and 3-8 from the left as observer faces the base station 10.

The base station 10 assigns consecutive time slots for transmitting the reference signals to adjacent beam spot groups 3 of all the beam spot groups 3. The adjacent beam spot groups 3 have, for example, a relation between the beam spot groups 3-5 and 3-6, the beam spot groups 3-6 and 3-7, or the beam spot groups 3-7 and 3-8. In short, this is a relation in which radiation ranges of the directional beams radiated by the base station 10 are adjacent to each other.

In the modification illustrated in FIG. 12, the base station 10 transmits the reference signals 2 in the order of the beam spot group 3-5, the beam spot group 3-6, the beam spot group 3-7, and the beam spot group 3-8. Alternatively, the base station 10 transmits the reference signals 2 in the order of the beam spot group 3-8, the beam spot group 3-7, the beam spot group 3-6, and the beam spot group 3-5.

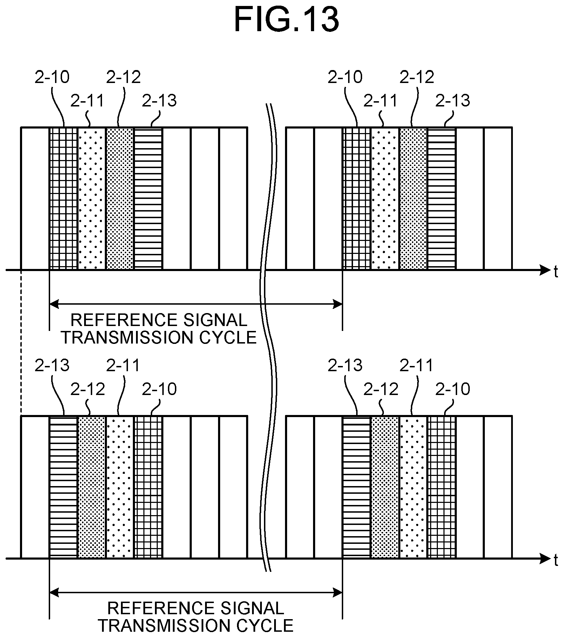

FIG. 13 is a diagram illustrating timings that the base station 10 illustrated in FIG. 12 uses for transmitting the reference signals 2 to the beam spot groups 3, respectively. The reference signal 2-10 is transmitted to the beam spot group 3-5, the reference signal 2-11 is transmitted to the beam spot group 3-6, the reference signal 2-12 is transmitted to the beam spot group 3-7, and the reference signal 2-13 is transmitted to the beam spot group 3-8.

In a case where the base station 10 transmits the reference signals 2 in the order of the beam spot group 3-5, the beam spot group 3-6, the beam spot group 3-7, and the beam spot group 3-8, the reference signal 2-10, the reference signal 2-11, the reference signal 2-12, and the reference signal 2-13 are sequentially transmitted in this order. In a case where the base station 10 transmits the reference signals 2 in the order of the beam spot group 3-8, the beam spot group 3-7, the beam spot group 3-6, and the beam spot group 3-5, the reference signal 2-13, the reference signal 2-12, the reference signal 2-11, and the reference signal 2-10 are sequentially transmitted in this order. These transmission orders can make timing and symbols of transmitting the reference signals 2 to the adjacent beam spot groups 3 to be adjacent to each other.

The terminal 20-1 located in the beam spot group 3-6 measures the reception qualities of the reference signals 2-10, 2-11, and 2-12 for the beam spot groups 3-5, 3-6, and 3-7 according to the instruction from the base station 10. Since the reference signals 2-10, 2-11, and 2-12 are transmitted continuously on the time axis, the time during which the terminal 20 keeps activated can be shortened. In addition, the terminal 20-2 located in the beam spot group 3-7 measures the reception qualities of the reference signals 2-11, 2-12, and 2-13 for the beam spot groups 3-6, 3-7, and 3-8 according to the instruction from the base station 10. Since the reference signals 2-11, 2-12, and 2-13 are also transmitted continuously on the time axis, the time during which the terminal 20 keeps activated can be shortened.

As described above, by assigning consecutive time slots for transmitting the reference signals 2 to the adjacent beam spot groups 3, the time during which the terminal 20 keeps activated can be shortened even when the terminal 20 measures the reception quality of the reference signals 2 for the plurality of beam spot groups 3. In this case, when the position estimation accuracy for the terminal 20 can be improved by increasing the number of reference signals 2 to be measured, it is possible to achieve an effect of extending the measurement cycle for the reference signals 2 and further shortening the time during which the terminal 20 keeps activated. Below is a description of this effect.

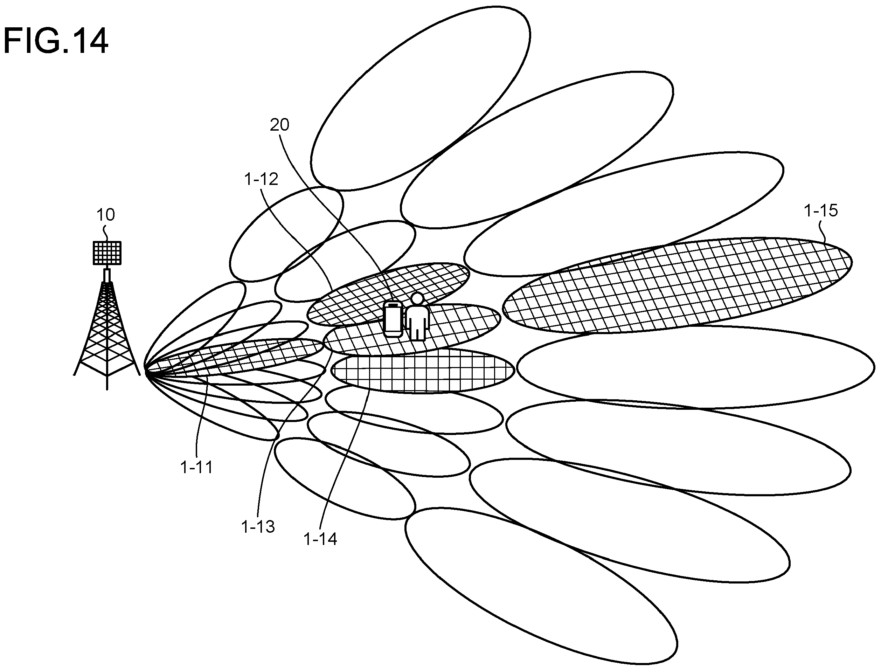

FIG. 14 is a diagram illustrating a first example of the beam spots 1 for which the terminal 20 according to the first embodiment of the present invention measures the reference signals 2. In the example illustrated in FIG. 14, the terminal 20 is located in the beam spot 1-13, and measures the reference signals 2 for not only the beam spot 1-13 but also the beam spots 1-11, 1-12, 1-14, and 1-15 that are adjacent to the beam spot 1-13.

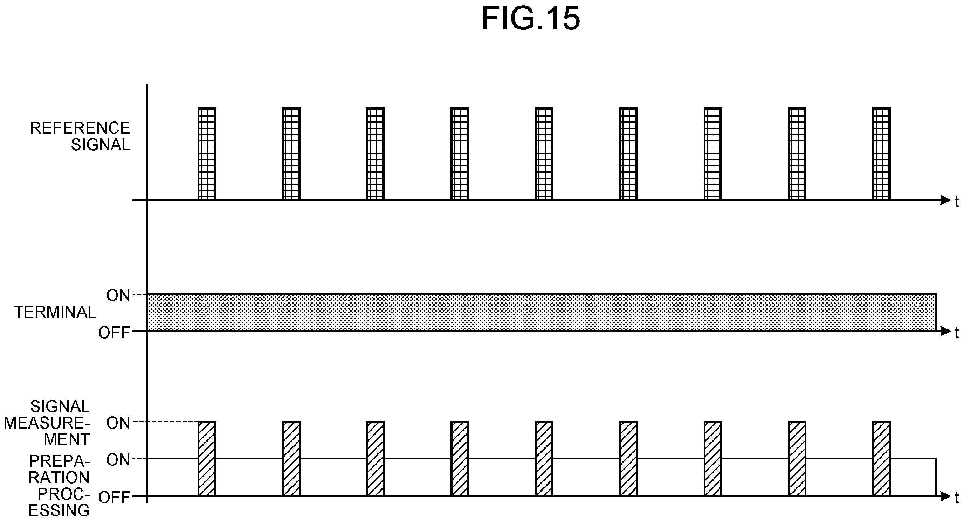

FIG. 15 is a diagram illustrating timings at which the base station 10 transmits reference signals and the state of the terminal 20 illustrated in FIG. 14 when the terminal 20 is operating in a normal mode. The base station 10 transmits the reference signals 2 at regular intervals. Since the terminal 20 is in the normal mode, the terminal 20 always keeps activated. The terminal 20 performs signal measurement processing for measuring the reception quality of the reference signals 2 at the timing(s) specified by the base station 10. The terminal 20 also executes preparation for signal measurement processing and preparation processing for data transmission and the like at the timings before and after the signal measurement processing. In this case, the reception quality of the reference signals 2 for a small number of beam spots 1 is frequently measured so as not to cause a beam connection failure.

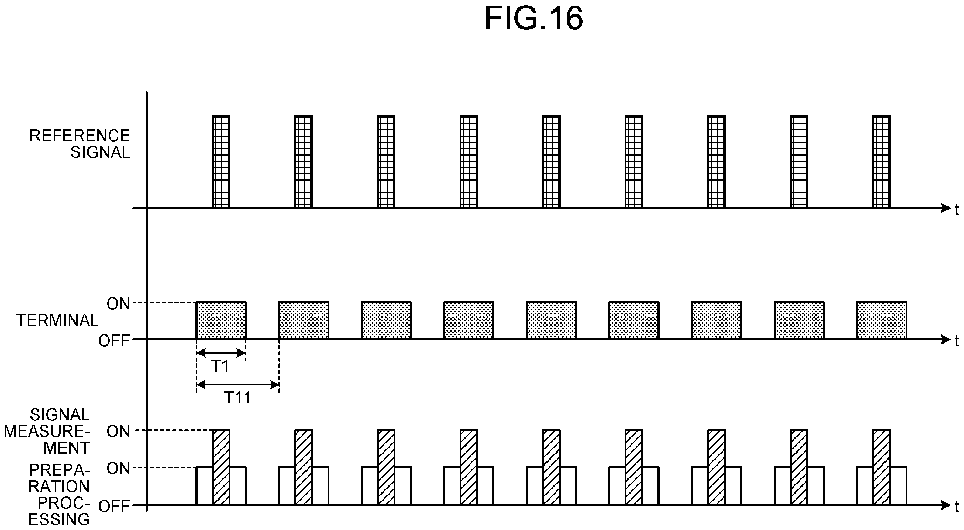

FIG. 16 is a diagram illustrating timings at which the base station 10 transmits reference signals and the state of the terminal 20 illustrated in FIG. 14 when the terminal 20 is operating in the intermittent reception mode. The base station 10 transmits the reference signals 2 at regular intervals as in FIG. 15. The terminal 20 makes itself activated only during the time T1, i.e. the sum of the time for performing the signal measurement processing on the reference signals 2 and the time for performing the preparation processing before and after the signal measurement processing. In this case, because the reference signals 2 are transmitted at regular intervals, the terminal 20 becomes activated in every cycle T11 corresponding to this transmission cycle for the reference signals 2.

In order to lengthen the cycle of activation of the terminal 20, it is contemplated that the terminal 20 decimates the reference signals 2 for measurement by skipping one or two reference signals 2, instead of measuring all the reference signals 2. In this case, however, the terminal 20 may be displaced out of the beam spot 1 irradiated by the base station 10 in the intermittent reception mode, resulting in a beam connection failure. If the terminal 20 during intermittent reception suffers a beam connection failure, the base station 10 has trouble in determining whether the terminal 20 is located in the coverage area CA or not, and becomes unable to perform any data transmission with the terminal 20. Therefore, in the present embodiment, the number of beam spots 1 to be measured is increased in order to prevent the occurrence of a beam connection failure. By increasing the number of beam spots 1 to be measured, it is possible to extend the measurement cycle for the terminal 20 during intermittent reception to measure the reception quality of reference signals.

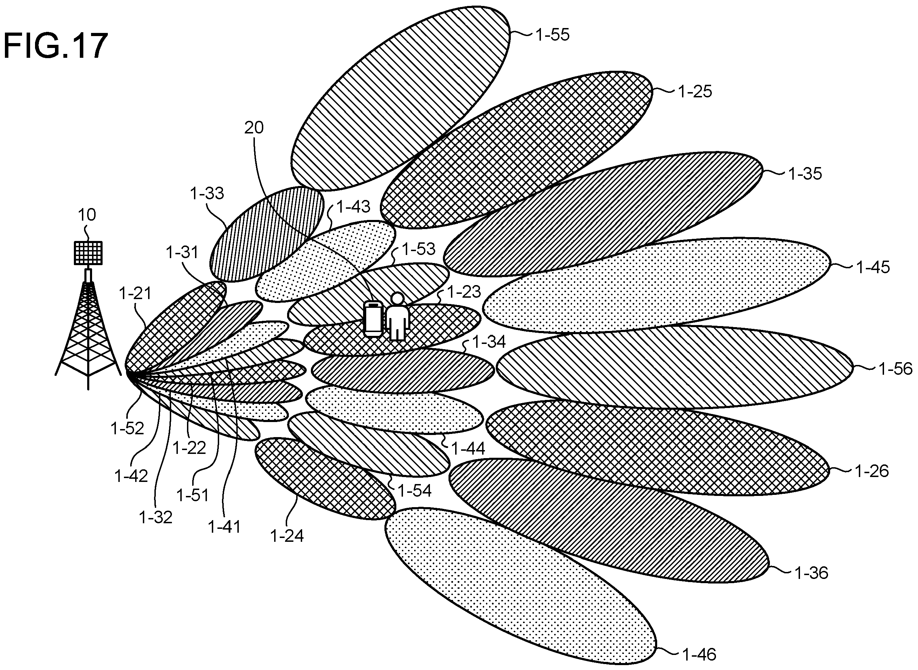

FIG. 17 is a diagram illustrating a second example of the beam spots 1 for which the terminal 20 according to the first embodiment of the present invention measures the reference signals 2. In the second example, the number of beam spots 1 to be measured by the terminal 20 is larger than that in the first example illustrated in FIG. 14. Specifically, the terminal 20 measures the reception qualities of the reference signals 2 transmitted to not only the beam spot 1-23 where the terminal 20 is located but also 17 beam spots 1-21, 1-31, 1-41, 1-51, 1-22, 1-32, 1-33, 1-43, 1-53, 1-34, 1-44, 1-55, 1-25, 1-35, 1-45, 1-56, and 1-26 around the beam spot 1-23 where the terminal 20 is located.

The beam spots 1-21, 1-31, 1-41, 1-51, 1-22, 1-32, 1-42, 1-52, 1-33, 1-43, 1-53, 1-23, 1-34, 1-44, 1-54, 1-24, 1-55, 1-25, 1-35, 1-45, 1-56, 1-26, 1-36, and 1-46 illustrated in FIG. 17 are divided into four beam spot groups 3. The beam spot groups 3 in the example illustrated in FIG. 17 are grouped by selecting beam spots 1 having a relation in which radiation ranges of directional beams radiated by the base station 10 are discrete, and for the other beam spot groups 3, sequentially grouped by including beam spots 1 adjacent to the beam spots 1 selected in the previously selected beam spot group 3. The first beam spot group 3 is composed of the beam spots 1-21, 1-22, 1-23, 1-24, 1-25, and 1-26. The second beam spot group 3 is composed of the beam spots 1-31, 1-32, 1-33, 1-34, 1-35, and 1-36. The third beam spot group 3 is composed of the beam spots 1-41, 1-42, 1-43, 1-44, 1-45, and 1-46. The fourth beam spot group 3 is composed of the beam spots 1-51, 1-52, 1-53, 1-54, 1-55, and 1-56. The base station 10 transmits a reference signal for each beam spot group 3.

In this case, in order to measure the reception qualities of the reference signals 2 transmitted to the beam spots 1-21, 1-31, 1-41, 1-51, 1-22, 1-32, 1-33, 1-43, 1-53, 1-23, 1-34, 1-44, 1-55, 1-25, 1-35, 1-45, 1-56, and 1-26, the base station 10 instructs the terminal 20 to measure the reference signals for all the beam spot groups 3.

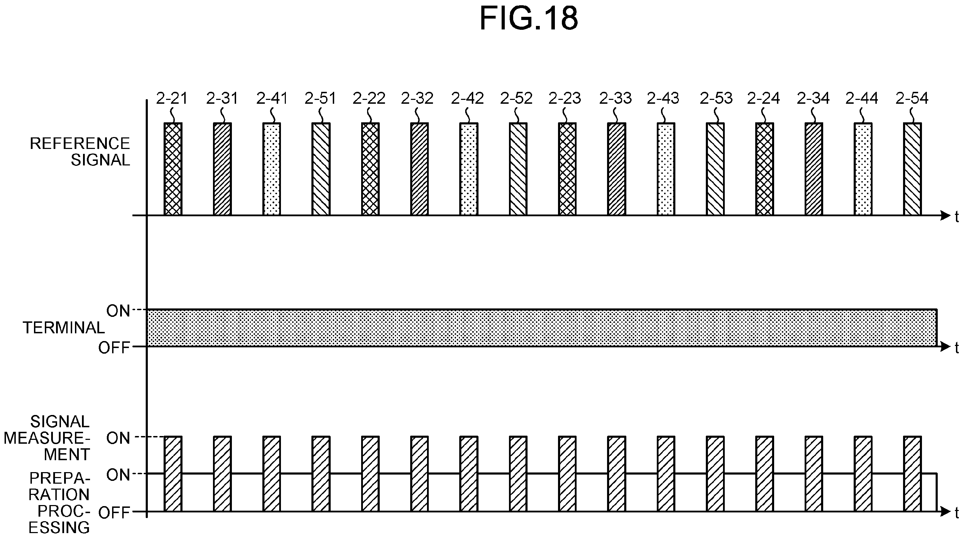

FIG. 18 is a diagram illustrating a first example of timings at which the base station 10 transmits the reference signals 2 and the state of the terminal 20 illustrated in FIG. 17 when the terminal 20 is operating in the intermittent reception mode. Here, the base station 10 transmits the reference signals 2 at regular intervals. In this case, the terminal 20 measures the reception qualities of all the reference signals 2-21, 2-31, 2-41, 2-51, 2-22, 2-32, 2-42, 2-52, 2-33, 2-43, 2-53, 2-23, 2-34, 2-44, 2-54, 2-24, 2-55, 2-25, 2-35, 2-45, 2-56, 2-26, 2-36, and 2-46. Therefore, the time for performing preparation processing for the terminal 20 to activate itself and the time for performing stop processing on the terminal 20 overlap. Thus, the terminal 20 cannot be in a shut-down condition and always keeps activated.

In the example illustrated in FIG. 18, even though the terminal 20 is operating in the intermittent reception mode, the terminal 20 cannot stop, thereby leading to increase in power consumption of the terminal 20. Then, it is contemplated that the timing at which the base station 10 transmits the reference signals 2 are made to be consecutive.

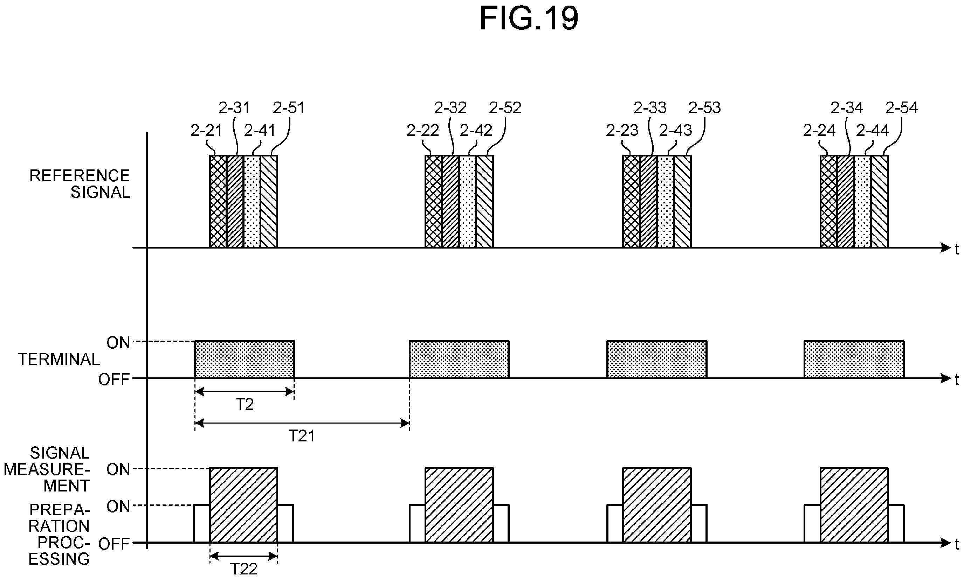

FIG. 19 is a diagram illustrating a second example of timings at which the base station 10 transmits the reference signals 2 and the state of the terminal 20 illustrated in FIG. 17 when the terminal 20 is operating in the intermittent reception mode. Here, the base station 10 makes timings at which a plurality of reference signals 2 are to be transmitted to be consecutive, not at regular intervals. By doing so, the time during which the terminal 20 performs activation processing and the time during which the terminal 20 performs stop processing do not overlap with each other, thereby allowing the terminal 20 to stop. Therefore, the activation time T2 of the terminal 20 is shorter than that in the example illustrated in FIG. 18, and the power consumption of the terminal 20 can be reduced. Here, the terminal 20 periodically repeats activation and stop in every activation cycle T21.

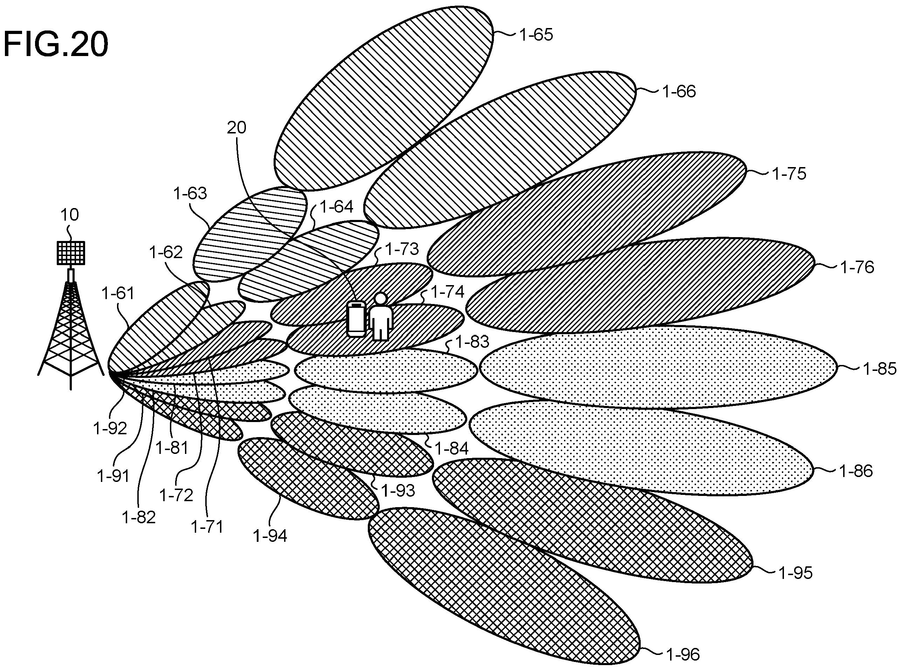

FIG. 20 is a diagram illustrating a third example of the beam spots 1 for which the terminal 20 according to the first embodiment of the present invention measures the reference signals 2. The beam spot groups 3 in the example illustrated in FIG. 20 are grouped by selecting a plurality of beam spots 1 with a relation in which radiation ranges of directional beams radiated by the base station 10 are adjacent to each other, and for the other beam spot groups 3, sequentially grouped by including beam spots 1 adjacent to the radiation ranges formed in the previously selected beam spot group 3. The beam spots 1-61 to 1-66 constitute the first beam spot group 3, the beam spots 1-71 to 1-76 constitute the second beam spot group 3, the beam spots 1-81 to 1-86 constitute the third beam spot group 3, and the beam spots 1-91 to 1-96 constitute the fourth beam spot group 3.

In this case, the beam spots 1 constituting the same beam spot group 3 are adjacent to each other. In this state, the base station 10 assigns consecutive time slots for transmitting the reference signals 2 to adjacent beam spot groups of the all beam spot groups 3. Note that the present invention does not necessarily require that only the beam spots 1 with discrete radiation ranges of the directional beams or only the beam spots 1 with adjacent radiation ranges of the directional beams should be grouped, and only requires that the radiation ranges be adjacent to each other for each beam spot group 3.

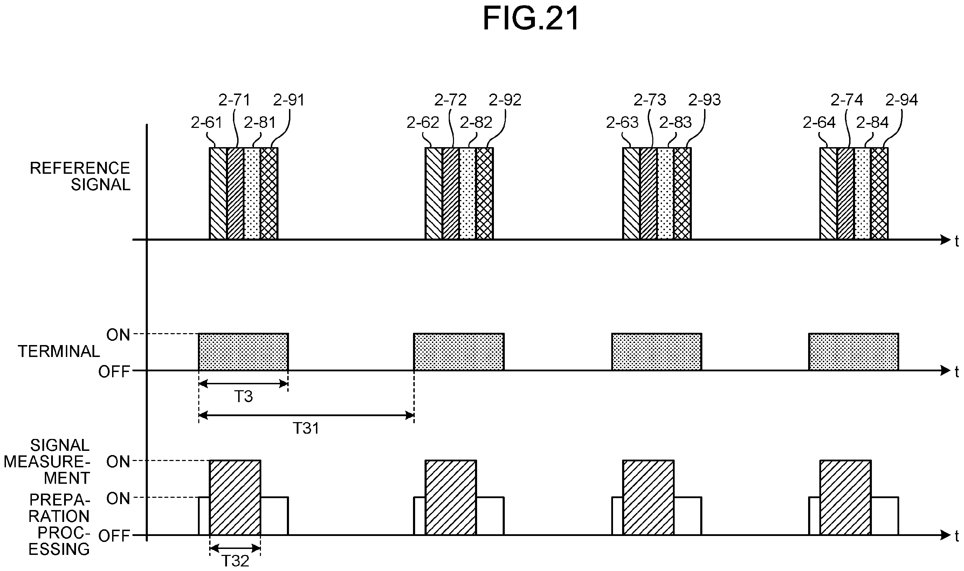

FIG. 21 is a diagram illustrating timings at which the base station 10 transmits the reference signals 2 and the state of the terminal 20 illustrated in FIG. 20 when the terminal 20 is operating in the intermittent reception mode. In this case, in a case where the terminal 20 measures the reception qualities of the reference signals 2 for 18 beam spots 1-61 to 1-66, 1-71 to 1-76, and 1-81 to 1-86 around the beam spot 1-74 where the terminal 20 is located, the terminal 20 only needs to measure the reception qualities of the reference signals 2 for the first beam spot group 3, the second beam spot group 3, and the third beam spot group 3, and does not need to measure the reception qualities of the reference signals for the fourth beam spot group 3. For this reason, the number of beam spot groups 3 to be measured is reduced by one as compared to the example illustrated in FIG. 19.

For example, the terminal 20 only needs to measure the reception qualities of the reference signals 2-61, 2-71, and 2-81 from among the reference signals 2-61, 2-71, 2-81 and 2-91. Therefore, the time T32 during which the terminal 20 performs signal measurement processing can be shorter than the time T22 in the example illustrated in FIG. 19. For this reason, the time T3 during which the terminal 20 is activated can be shorter than the activation time T2 in the example illustrated in FIG. 19, and the activation cycle T31 of the terminal 20 can be longer than the activation cycle T21 in the example illustrated in FIG. 19. Therefore, the power consumption of the terminal 20 can be further reduced.

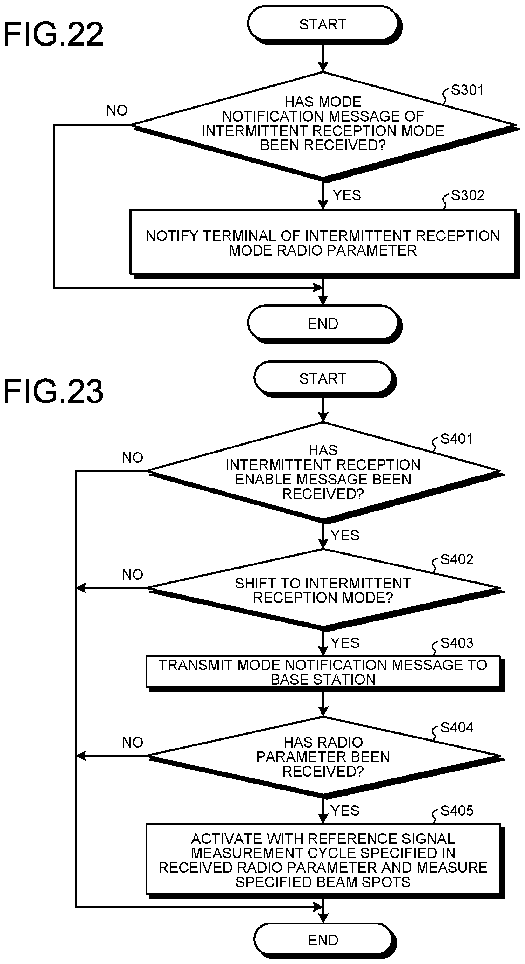

FIG. 22 is a flowchart illustrating the operation of the base station 10 when the terminal 20 illustrated in FIG. 1 shifts to the intermittent reception mode. As a precondition, it is assumed that the target terminal 20 is located in the coverage area CA of the base station 10 and is not in the intermittent reception state. First, the base station 10 determines whether or not a mode notification message indicating the intermittent reception mode has been received from the terminal 20 (step S301). If the mode notification message has been received (step S301: Yes), the base station 10 creates radio parameters for the intermittent reception mode, and notifies the terminal 20 of the created radio parameters (step S302). Examples of radio parameters provided by the base station 10 for notification include the number of beam spots to be measured by the terminal 20, the measurement cycle for the reference signals, and so on. If the mode notification message has not been received (step S301: No), a process of step S302 is omitted.

FIG. 23 is a flowchart illustrating the operation of the terminal 20 when the terminal 20 illustrated in FIG. 1 shifts to the intermittent reception mode. As a precondition, it is assumed that the target terminal 20 is located in the coverage area CA of the base station 10 and is not in the intermittent reception state. The terminal 20 determines whether or not an intermittent reception enable message has been received from the base station 10 (step S401). If the intermittent reception enable message has been received (step S401: Yes), the terminal 20 determines whether or not the terminal 20 has shifted to the intermittent reception mode (step S402). If the intermittent reception enable message has not been received (step S401: No), the terminal 20 remains in the normal mode and the subsequent processes are omitted.

If the terminal 20 has shifted to the intermittent reception mode (step S402: Yes), the terminal 20 transmits, to the base station 10, a mode notification message for notifying the base station 10 that the terminal 20 is in the intermittent reception mode (step S403). If the terminal 20 has not shifted to the intermittent reception mode (step S402: No), the terminal 20 remains in the normal mode and the subsequent processes are omitted.

After transmitting the mode notification message to the base station 10, the terminal 20 determines whether or not a radio parameter has been received from the base station 10 (step S404). If the radio parameter has been received (step S404: Yes), the terminal 20 is activated with the reference signal measurement cycle specified by the base station 10 to measure the specified beam spots 1 (step S405). If any radio parameters have not been received (step S404: No), a process of step S405 is omitted.

Next, description is given for the measurement cycle for the reference signals 2, which is applied to the terminal 20 during intermittent reception. As one embodiment, it is conceivable to integrate a search beam that is an initial supplementary signal for the terminal 20 and a beam for the beam tracking. In this case, the transmission cycle for search beams individually determined for each base station 10 may differ from the measurement cycle for the reference signals 2 measured by the terminal 20 during intermittent reception.

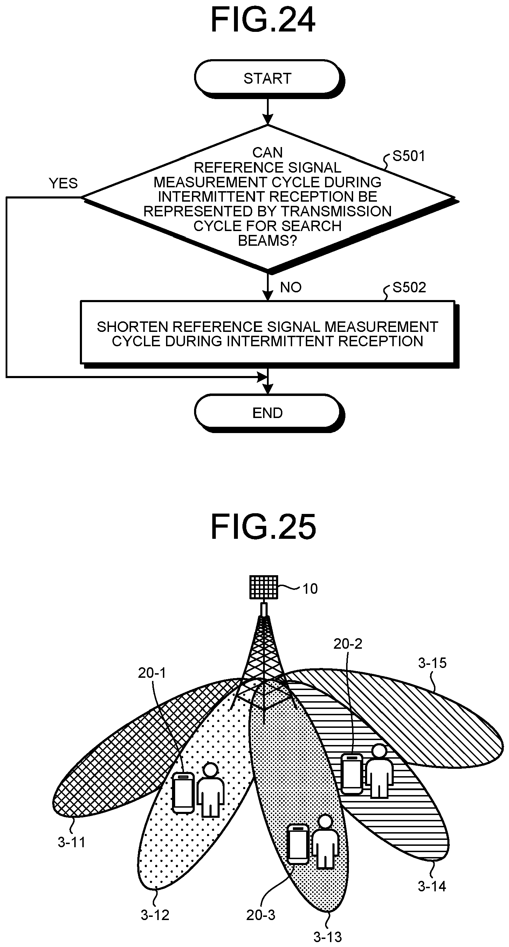

FIG. 24 is a flowchart illustrating the operation in which the base station 10 illustrated in FIG. 1 determines the reference signal measurement cycle of the terminal 20. First, the base station 10 determines the measurement cycle for reference signals in the terminal 20 during intermittent reception based on at least one of the reference signal measurement cycle in the normal mode, the number of beam spots to be measured by the terminal 20 during intermittent reception, and the moving speed of the terminal 20. Then, the base station 10 determines whether or not the reference signal measurement cycle during intermittent reception can be represented by the transmission cycle for search beams (step S501).

For example, the base station 10 can perform the determination in step S501 on the basis of whether or not the reference signal measurement cycle during intermittent reception is a multiple of the transmission cycle for search beams. If the reference signal measurement cycle during intermittent reception cannot be represented by the transmission cycle for search beams (step S501: No), the base station 10 adjusts the reference signal measurement cycle during intermittent reception to a value that can be represented by the transmission cycle for search beams by making the reference signal measurement cycle during intermittent reception shorter than the value obtained in step S501 (step S502). If the reference signal measurement cycle during intermittent reception can be represented by the transmission cycle for search beams (step S501: Yes), a process of step S502 is omitted.

FIG. 25 is a diagram for explaining the reference signal measurement cycle of the terminal 20 illustrated in FIG. 1. The base station 10 forms five beam spot groups 3-11, 3-12, 3-13, 3-14, and 3-15 in the coverage area CA. In the coverage area CA of the base station 10, the terminal 20-1 is located in the beam spot group 3-12, the terminal 20-2 is located in the beam spot group 3-14, and the terminal 20-3 is located in the beam spot group 3-13. The terminals 20-1 and 20-3 operate in the intermittent reception mode, and the terminal 20-2 operates in the normal mode.

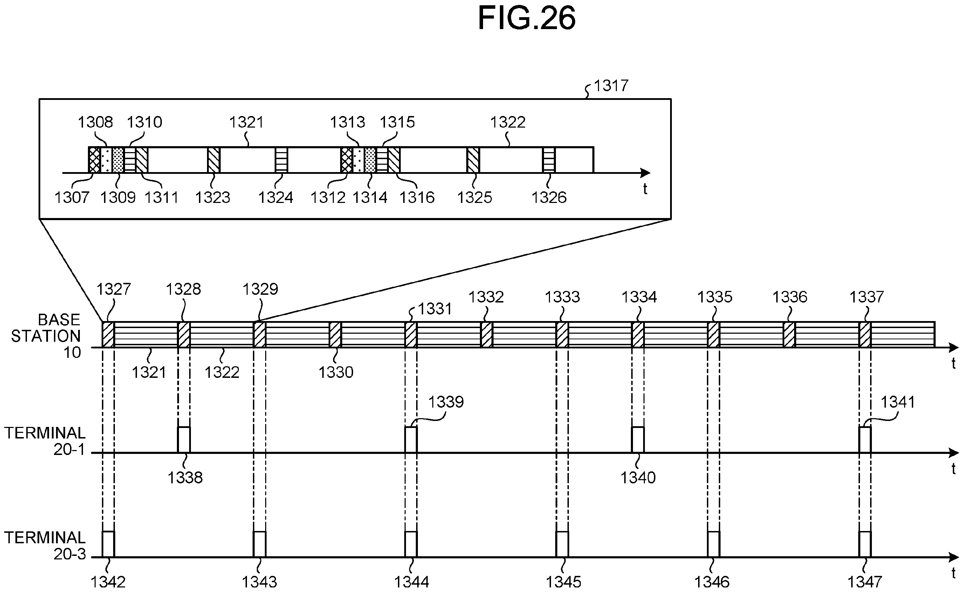

FIG. 26 is a chart illustrating communication timings of the base station 10 and the state of the terminals 20 illustrated in FIG. 25. FIG. 26 depicts the periods 1327 to 1337 during which the base station 10 transmits search beams and the periods 1321 and 1322 during which data transmission and reception and/or transmission of the reference signals 2 are performed. The terminal 20-1 measures the reception qualities of the reference signals 2 in the periods 1338, 1339, 1340, and 1341. The terminal 20-3 measures the reception qualities of the reference signals 2 in the periods 1342, 1343, 1344, 1345, 1346, and 1347.

Referring to an enlarged sub-chart 1317, the period 1327 for transmitting search beams is formed of the periods 1307 to 1311 for transmitting a plurality of reference signals 2 transmitted by the base station 10. The period 1307 is a period for transmitting the reference signals 2 to the beam spot group 3-11. The period 1308 is a period for transmitting the reference signals 2 to the beam spot group 3-12. The period 1309 is a period for transmitting the reference signals 2 to the beam spot group 3-13. The period 1310 is a period for transmitting the reference signals 2 to the beam spot group 3-14. The period 1311 is a period for transmitting the reference signals 2 to the beam spot group 3-15.

The transmission of the reference signals 2 to each of the beam spot groups 3-11 to 3-15 is repeatedly performed. The periods 1312, 1313, 1314, 1315, and 1316 are periods for transmitting the reference signals 2 to the beam spot groups 3-11, 3-12, 3-13, 3-14, and 3-15, respectively. This search beam may be used for the base station 10 to grasp the position of the terminal 20 located in the coverage area CA of the base station 10.

For example, the base station 10 can find the terminal 20 that has newly entered the coverage area CA of the base station 10, or the base station 10 can find the location of the terminal 20 that has become active in the coverage area CA of the base station 10. The base station 10 transmits data to and receives data from the terminal 20 in the periods 1321 and 1322. Since the terminal 20-2 operating in the normal mode frequently transmits and receives data, it is necessary to sequentially select the beam spot 1 at which the optimum throughput can be obtained. For this reason, the number of beam spots 1 to be measured is reduced so that the base station 10 can track the movement of the terminal 20. To this end, the base station 10 transmits the reference signals to the terminal 20-2 operating in the normal mode not only at the search beam timing but also during the period 1323 in the period 1321 and during the period 1325 in the period 1322. In some cases, data transmission and reception between the base station 10 and the terminal 20 may be possible even during the period of transmitting the reference signals 2 or even during the transmission period for the search beam.

The transmission cycle for reference signals to be measured by the terminals 20-1 and 20-3 during intermittent reception is adjusted to coincide with the transmission cycle for search beams that the base station 10 periodically radiates, or adjusted to be a multiple of the transmission cycle for search beams, thereby making it possible to share and effectively use resources. Specifically, the number of symbols for reference signal transmission can be reduced, and the number of symbols for data transmission can be increased, and thereby the throughput can be improved.

As described above, according to the first embodiment of the present invention, the base station 10 assigns consecutive time slots for transmitting reference signals respectively to the adjacent beam spot groups 3. This makes it possible to shorten the activation time of the terminal 20 and reduce the power consumption of the terminal 20.

The configurations described in the above-mentioned embodiment reside in examples of the contents of the present invention, and can be combined with other publicly known techniques and partially omitted and/or modified without departing from the scope of the present invention.

### Reference Signs List

1, 1-1 to 1-15, 1-21 to 1-26, 1-31 to 1-36, 1-41 to 1-46, 1-61 to 1-66, 1-71 to 1-76, 1-81 to 1-86, 1-91 to 1-96 beam spot; 2, 2-1 to 2-13, 2-21 to 2-24, 2-31 to 2-34, 2-41 to 2-44, 2-51 to 2-54, 2-61 to 2-64, 2-71 to 2-74, 2-81 to 2-84, 2-91 to 2-94 reference signal; 3, 3-1 to 3-8, 3-11 to 3-15 beam spot group; 10 base station; 11, 21 antenna; 12, 22 communication unit; 13, 23 demodulation unit; 14, 26 control unit; 15, 27 modulation unit; 16 beam control unit; 20, 20-1, 20-2, 20-3 terminal; 24 level measurement unit; 25 processing unit; 31 processing circuit; 32 transmitter; 33 receiver; 34 antenna device; 35 processor; 36 memory; 1307 to 1316, 1321 to 1325, 1327 to 1347 period; CA coverage area.

## Claims

1. A base station comprising:
a communication unit capable of transmitting a reference signal to a plurality of beam spots that are radiation ranges of a directional beam, the reference signal being used by a terminal in a beam spot to measure a reception quality, and capable of transmitting the reference signal simultaneously to a beam spot group formed of one or more of the beam spots; and
a control unit to assign consecutive time slots for transmitting the reference signal to a target beam spot group of beam spot groups each corresponding to the beam spot group, which covers adjacent radiation ranges.

2. The base station according to claim 1, wherein the control unit notifies the terminal of timings at which the terminal measures reception qualities of the reference signals.

3. The base station according to claim 1, wherein the control unit changes, using a parameter change message that notifies the terminal of a measurement cycle for the reference signal, the measurement cycle set in the terminal to a measurement cycle common to the terminals.

4. The base station according to claim 1, wherein the control unit adjusts a measurement cycle for the terminal to measure the reference signal, based on a transmission cycle for a search beam periodically radiated by the communication unit for initial capture of the terminal.

5. The base station according to claim 4, wherein the control unit sets the measurement cycle to a multiple of the transmission cycle for a search beam.

6. The base station according to claim 4 or 5, wherein when the measurement cycle is not a multiple of the transmission cycle for a search beam, the control unit adjusts the measurement cycle to a multiple of the transmission cycle for a search beam, and notifies the terminal of a measurement cycle obtained by the adjustment.

7. The base station according to claim 1, wherein the control unit increases the number of beam spots to be measured by the terminal during intermittent reception as compared to that in a normal time in which intermittent reception is not performed.

8. The base station according to claim 7, wherein the control unit determines a measurement cycle for the terminal to measure the reference signal during intermittent reception, based on at least one of an increase in the number of beam spots, the measurement cycle in the normal time, and a moving speed of the terminal, and notifies the terminal of the measurement cycle determined.

9. The base station according to claim 1, wherein in accordance with a message that requests the terminal to switch to an intermittent reception mode, the control unit changes a measurement cycle for the terminal to measure the reference signal and the number of beam spots to be measured by the terminal from those in a normal time.

10. The base station according to claim 9, wherein the control unit performs notification of the beam spots to be measured by the terminal in units of beam spot groups.

11. The base station according to claim 1, wherein the beam spot group includes a plurality of beam spots whose radiation ranges are adjacent to each other.

12. A radio communication method comprising:
a step of a base station transmitting a reference signal to two or more beam spots each being a radiation range of a directional beam, the reference signal being used by a terminal in a beam spot to measure a reception quality; and
a step of the terminal measuring the reception quality of the reference signal and transmitting a measurement result to the base station, wherein
when transmitting the reference signal to the beam spots, the base station assigns consecutive time slots for transmitting the reference signal to a target beam spot group covering adjacent ones of the radiation ranges, of two or more beam spot groups which are each formed of the beam spots to which the reference signal is transmitted simultaneously.
